# EUROPEAN PATENT APPLICATION

(11) **EP 2 645 671 A1**
(43) Date of publication of application: **02.10.2013**
(21) Application number: 13161718.5
(22) Date of filing: 28.03.2013
(51) Int. Cl.: H04L 29/06, H04L 29/08

(54) **Switching the playing out of information content beween end-user devices**

(30) Priority: 30.03.2012 EP 12162510
(71) Applicant: Koninklijke KPN N.V., 2516 CK The Hague (NL)
(72) Inventor: Casal Gomez, Alejandro, 2492 VX The Hague (NL)
(74) Representative: Wuyts, Koenraad Maria

(57) **Abstract**

Electronic information content is being streamed in different versions only differing from one another in their streaming formats. As a result of the streaming formats being different, the playing out of the electronic information content in a first version at a first play-out device lags behind the playing out of a second version at a second play-out device. If the end-user issues a command to switch the playing out of the same information content from the first play-out device to the second play-out device, the data of the second version is buffered and the playing out of the second version starts from the buffer when the playing out of the first version has caught up with the state second version assumed at the start of the buffering.

## Description

### FIELD OF THE INVENTION

The invention relates to a system of an end-user that is configured for playing out to the end-user electronic information content. The invention also relates to a first sub-system for use in such a system, a second sub-system for use in such a system, and a controller for use in such system. The invention further relates to first control software, second control software and a method for controlling such a system.

### BACKGROUND ART

Consider a system of an end-user that is configured for playing out to the end-user electronic information content that is being streamed over the Internet from a service provider to the system. The system comprises a first device for playing out the electronic information content and a second device for playing out the electronic information content. Consider a scenario wherein the end-user is consuming the electronic information content, e.g., watching streaming video, at the first device and wherein the end-user wants to transfer the playing out of the video from the first device to the second device. For example, the first device has a low-resolution display monitor whereas the second device has a high-resolution display monitor, and the end-user wants to watch the remainder of the streaming video in high resolution.

In case the first device and the second device are both configured for running software of Apple, Inc., the end-user may use a proprietary protocol stack developed by Apple, Inc, and referred to in the market as "Airplay". The Airplay protocol stack allows wireless streaming of audio and video, together with their metadata, between Apple's play-out devices ("iDevices") or Apple-compatible play-out devices. For example, the first device is an iPad and the second device is an AppleTV. Accordingly, the video streamed to, and initially played out at, the first device is then streamed wirelessly from the first device to the second device so as to enable the end-user to watch the video being played out at the second device instead.

US 2009/222 874 A1 describes a method, device and system for providing IPTV session mobility between end user communication devices. The IPTV session mobility is here provided using a control server configured to manage and facilitate the transfer of the IPTV session in response to receiving appropriate IPTV session control information from the set-top box and/or the mobile communication device.

US 2007/195756 A1 describes a terminal switching technology for seamlessly switching streaming sessions between terminals. In this technology, a switching destination terminal has an establishing section establishing a streaming session with a communicating party according to a terminal switching request, a receiving section receiving data from the communicating party after a streaming session is established with the communicating party, a storing section storing received data, and an acquisition section acquiring newest data from the terminal apparatus of the switching source transmitting the terminal switching request in the event that the newest data to be outputted is not in the storing section after the terminal switching request is received and the storing section starts storing the data.

EP 2 180 652 A1 describes a method and system for transferring media information, the system comprising first terminal equipment configured to receive and present media data related to a media session, and to provide information associated with the media session, and second terminal equipment configured to receive the information associated with the media session provided by the first terminal equipment, and to receive and present at least part of the media data related to the media session on the basis of the received information, wherein the first terminal equipment is configured to provide the information associated with the media session by displaying a visual identifier associated with the media session, and the second terminal equipment is configured to receive the information associated with the media session by reading said visual identifier displayed by the first terminal equipment.

US 2011/125 909 A1 provides methods and systems for forwarding a media streaming session from one node to another node while the session is in progress. A streaming server may store data sent between nodes in the session. When one node is forwarded to a new node, the stored data may be used to transition to the new node with little or no interruption in data sent between nodes in the session.

### SUMMARY OF THE INVENTION

The Airplay technology enables to switch the playing out of streamed information content from a first device to another device by having the first device stream the electronic information content further to the other device and in a wireless manner. However, the Airplay technology requires each respective one of the first device and the second device to be a respective iDevice or a compatible play-out device. In addition, the Airplay technology requires that the first device act as a local streaming-video server to stream the information content wirelessly to the second device. That is, both the first device and the second device remain operational after the playing out of the information content has been transferred from the first device to the second device. Furthermore, the Airplay technology cannot handle different streaming formats. For example, Airplay technology supports H.264 Baseline Profile (BP) and H.264 Main Profile (MP), but does not support H.264 High Profile (HiP). As known, H.264 AVC is a widely used standard for video compression. The standard defines eighteen sets of capabilities, referred to as "profiles", each specific one of which being configured for targeting a specific class of applications. BP is primarily used in low-cost applications that require additional data loss robustness such as video conferencing and some mobile applications. MP is used for standard-definition digital TV broadcasts. HiP is the primary profile for video broadcast, particularly for high-definition television applications or for Internet Protocol television (IPTV) live streaming

IPTV is a service characterized by the delivery of IP television over a managed data network. A managed data network is configured for providing a guaranteed quality-of-service (QoS). In contrast, Over-the-top (OTT) content delivery refers to the delivery of video and audio via a data network without the network service provider being involved in the control and distribution of the electronic content itself, i.e., via an unmanaged data network, commonly: the open Internet. IP Multicast and the combination of RTSP and UDP/IP are common streaming protocols used in IPTV. HTTP/TCP/IP are the common protocols used for streaming in OTT content delivery. The acronym "IP" stands for "Internet Protocol"; the acronym "RTSP" stands for "Real Time Streaming Protocol"; the acronym "UDP" stands for "User Datagram Protocol"; the acronym "HTTP" stands for "Hypertext Transfer Protocol"; and the acronym "TCP" stands for "Transmission Control Protocol", all well known in the art.

The inventor therefore proposes an alternative approach wherein the electronic information content is available as being streamed in a first streaming format (or, more generally: in a first streaming communications protocol), and is available as being streamed in a second, different streaming format ((or, more generally: in a second streaming protocol) in parallel to being streamed in the first streaming format. The feature "protocol" refers to a conglomerate of message formats and rules, in order to exchange messages between data processing entities such as computers. A message is composed of a string of bits (bitsstrings). A bitstring is divided into fields and the bits in each particular field are interpreted under the protocol as representing a particular piece of information: either as representing the payload of the message or representing particular control information for control of properly executing the exchange of the messages. A streaming communications protocol is a protocol used for streaming: streaming media is received and presented to the end-user while being delivered by the streaming provider, so that the streamed data is rendered and presented to the end-user before the entire data file has been transmitted. Examples of streaming communications protocols are IP multicast, HTTP Live Streaming, Microsoft Smooth Streaming, MPEG-DASH, Adobe HTTP Dynamic Streaming. A first sub-system of the end-user is configured for playing out the electronic information content being streamed in the first streaming format, and a second sub-system of the end-user is configured for playing out the electronic information content being streamed in the second streaming format. If the electronic information content is being streamed in different data streams in parallel, each having its own streaming format, the playing out of the electronic information content being streamed in a particular streaming format is generally not synchronized with the playing out of the same electronic information content being streamed in a different streaming format. That is, just switching the playing out from the first sub-system to the second sub-system causes the end-user either to miss a particular piece of the electronic information content, or to consume the same piece twice. When the end-user wants to switch the playing out from the first sub-system to the second sub-system, it is recommended that the unsynchronized playing out be taken into account.

The inventor proposes a system of an end-user that is configured for playing out to the end-user electronic information content as a sequence of information content units (e.g., video frames, audio frames). The electronic information content is being streamed as first data supplied in a relevant one of a first multicast or in a first broadcast using a first streaming protocol. The electronic information content is being streamed as second data supplied in a further relevant one of a second multicast or in a second broadcast using a second streaming protocol. The relevant one of the first multicast and the first broadcast and the further relevant one of the second multicast and the second broadcast run in parallel. The first streaming protocol is different from the second streaming protocol. The streaming of particular ones of the second data being representative of any particular one of the information content units in the further relevant one of the second multicast and the second broadcast precedes the streaming of further particular ones of the first data being representative of the particular information content unit in the relevant one of the first multicast and the first broadcast. The system comprises: a first sub-system configured for playing out the electronic information content that is being received as the first data; a second sub-system configured for playing out the electronic information content that is being received as the second data; and a buffer interface to a data buffer. The data buffer is configured for buffering the second data. The system is configured for performing a series of steps in response to the system receiving (e.g., from the end-user) a command to switch a current playing out of the electronic information content from the first sub-system to the second sub-system. The series of steps comprises: determining a current identity of a current information content unit being currently played out at the first sub-system; identifying a specific information content unit that is formed by specific ones of the second data buffered in the data buffer and that has a specific identity corresponding to the current identity; and initiating the playing out of the electronic information content at the second sub-system from the data buffer and from the specific information content unit onwards.

The electronic information content is supplied in a first multicast or in a first broadcast using the first streaming protocol, as well as in a second multicast or in a second broadcast using a second streaming protocol. The streaming of the electronic information content using the first streaming protocol and the streaming of the electronic information content using the second streaming protocol run in parallel. That is, the progressive delivery of the electronic content information in the first multicast or in the first broadcast, on the one hand, and the progressive delivery of the electronic content in the second multicast or in the second broadcast, on the other hand, occur within the same time frame. For example, the electronic information content is created and streamed in real-time via the Internet, such as a live TV broadcast of an event evolving during the TV broadcast. However, the differences between the first streaming protocol and the second streaming protocol give rise to a time difference between the delivery of a particular information content unit using the second streaming protocol and the delivery of the same information content unit using the first streaming protocol. Here the delivery using the second streaming protocol precedes the delivery using the first streaming protocol. The time difference finds its origin in, e.g., the encoding and/or the encapsulation of the electronic information content into different streaming formats and may amount to, e.g., tens of seconds.

In the system of the invention, the playing out of electronic information content is switched from the first sub-system to the second sub-system in a substantially seamless manner by use of the data buffer configured for buffering the second data. In response to the system receiving the command, the system determines the current identity of the information content unit being played out at the time of receiving the command. Then, the data buffer is consulted to identify a specific information content unit, which is formed by specific ones of the second data buffered in the data buffer and whose specific identity corresponds to the current identity. Upon having located the specific information content unit, the system initiates the playing out of the electronic information content at the second sub-system from the data buffer and from the specific information content unit onwards.

The criterion "the specific identity corresponds to the current identity" can be implemented in any of a variety of manners. For example, the expression "corresponds to" is given the meaning of "is identical to". As another example, the expression "corresponds to" is given the meaning of: "the specific identity has a pre-determined, positive offset to the current identity", i.e., the specific information content unit comes after the current information unit in the playing out of the information content, so as to take into account delays in the system before the second sub-system can actually start the playing out.

The data buffer may form part of the end-user system and may then be accommodated in, e.g., a digital video recorder (DVR) or in a personal computer of the end-user, etc. Alternatively, the data buffer may reside at a remote location, being connectable to the system of the end-user via a data network and the system's buffer interface. For example, the data buffer forms part of the equipment of the service provider that is streaming the first data and the second data. As another example, the data buffer forms part of other equipment of another service provider who buffers the second data as from the start of the second broadcast or second multicast, and makes the second data available in individual unicasts for a centralized time-shifting of TV broadcasts. See, e.g., the television services provided under the service mark "U-verse" of AT&T, known in the art.

In a first embodiment of the system of the invention, the series of steps comprises controlling the data buffer to start buffering of the second data in the data buffer. Accordingly, the data buffer is made operational upon the system receiving the command to switch the playing out from the first sub-system to the second sub-system.

The second data is stored in the data buffer as from the moment of the end-user system receiving the command. After a while, the streaming of the first data that is being received at the system of the end-user has arrived at, or near, the stage, wherein this first data is representative of an information unit or of a set of information units that is the same as that which has been stored in the data buffer as the second data that was received by the data buffer at the start of the buffering. When the streaming of the first data has arrived at that stage, the playing out of the streamed information content can be switched from the first sub-system to the second sub-system. The second sub-system then starts playing out the information content from the data buffer. The new second data that is being streamed in the second multicast or second broadcast is stored into the data buffer, and the second sub-system continues to play out the information content from the data buffer so as to bridge the delay between the streaming of the first data and the streaming of the second data.

Assume that the data buffer forms part of the system of the end-user. It can happen that, at the time of the system of the end-user receiving the switching command, the second sub-system was receiving and playing out other electronic content information being provided in another IP multicast. If the second sub-system has adequate capabilities, the second sub-system can continue receiving and playing out the other electronic information content and, at the same time, receive the first-mentioned electronic information content being streamed as the second data and control the buffering of the second data in a background process. The second sub-system may then stop playing out the other information content and start playing out the first-mentioned electronic information content from the buffer when the condition for switching from the first sub-system to the second sub-system falls due. If the second sub-system does not have adequate capabilities to process two different data streams (the other information content and the first-mentioned information content) at the same time, the second sub-system will terminate the receiving of the other electronic information content so as to be able to start receiving the first-mentioned information content, formed by the streamed second data, in order to be able to control the buffering of the second data. In both cases the second sub-system has to tune to the receiving of the second data in the second multicast or second broadcast. In practice, the operation of changing channels in an IP multicast environment includes issuing an "IGMP Leave" command to stop receiving the other information content, and then issuing an "IGMP Join" command to start receiving the first-mentioned information content. The acronym "IGMP" stands for "Internet Group Management Protocol", which is a known communications protocol used by hosts and routers on an IP multicast network to establish multicast group memberships. The IGMP commands are issued by the second sub-system and propagate up into the IP multicast network, until the IGMP commands reach an IGMP router which processes these commands. This is typically a southbound interface of a DSLAM (Digital Subscriber Line Access Multiplexer) or another aggregation point. On a northbound interface of the DSLAM, all IP multicast channels coming from the head-end are terminated. Based on IGMP Leave commands and IGMP Join commands received, the DSLAM decides which IP multicast channels from the northbound interface are passed on to which access lines on the southbound interface.

In the system specified above, the playing out of the electronic information content at the second sub-system from the data buffer is initiated when the current identity corresponds to the specific identity. The playing out at the second sub-system may be initiated so as to gradually fade in, thereby avoiding an abrupt change in the user-experience. The playing out at the first sub-system may continue and can be terminated by the end-user at will. Alternatively, the playing-out at the first sub-system may be controlled automatically so as to gradually fade out in order to avoid an abrupt change in the user experience. As yet another alternative, the first sub-system switches to a Remote Control application, which in turn further controls the second sub-system. Remote Control applications are well-known on, e.g., smartphones or tablet PCs, for controlling TV-sets and other consumer-electronics (CE) devices. A Remote Control application is an installable software application configured for controlling one or more CE devices from, e.g., a smart-phone or a general-purpose personal computer, over Wi-Fi. The gradual fade-out at the first sub-system is a signal to the end-user that the playing out is starting at the second sub-system. Optionally, a message may be given to the end-user, e.g., as a notification in an overlay window at the display monitor of the first sub-system and at the display monitor of the second sub-system that the system is busy transferring the playing out from the first sub-system to the second sub-system.

In a second embodiment of the system of the invention, the data buffer is operative to accumulate the second data as from a start of the second broadcast or of the second multicast. Accordingly, the data buffer is put into operational use as from the start of the second broadcast or the second multicast. This way, the switching of the playing out can be completed as soon as the specific information content unit has been identified in the data buffer, as the data buffer contains all information content units having been streamed in the second data right from the start of the second broadcast or the second multicast.

In the second embodiment the data buffer may form part of the equipment of a service provider. The data buffer may then serve as an IP multicast source to which the second sub-system can be tuned using the IGMP communications protocol as discussed above. The data buffer then functions as a time-shifting application uniform to all end-users who want to switch from receiving the information content streamed under the first streaming protocol to receiving the same information content streamed under the second streaming protocol.

In a third embodiment, the data buffer is operative to buffer the second data as from a start of the first sub-system receiving the first data. In this third embodiment, the data buffer is rendered operational under control of the first sub-system starting the playing out of the electronic information content received as the first data. In this third embodiment the second data starts to be buffered in the data buffer as soon as the first sub-system has started playing so as to anticipate the switching of the playing out to the second sub-system from the data buffer. The second data in the data buffer may be overwritten after a while by newly arrived second data. If this option is implemented, the capacity of the data buffer with regard to the buffering of the second data is tuned to the delay between the information content as streamed in the first data and the same electronic information content as streamed in the second data. The data buffer then may serve the buffered second data in a unicast stream.

In a fourth embodiment of the system of the invention, the system is configured for performing a further series of steps in response to the system receiving (e.g., from the end-user) a further command to switch a current playing out of the electronic information content from the second sub-system to the first sub-system: determining a further specific identity of a further specific information content unit that is being played out at the second sub-system when the system receives the command; determining a further current identity of a further current information content unit in the first data being received at the system; comparing the further current identity to the further specific identity; and initiating the playing out at the first sub-system of the electronic information content that is being received at the system in the first data, if the current identity corresponds to the specific identity.

As mentioned above, receipt of the electronic information content streamed as the first data lags behind the receipt of the electronic information content streamed as the second data. As a result, the end-user has to wait until the playing out of the streamed information content can resume at the first sub-system at the stage where the playing out of the streamed information content was at the time of the system receiving the further command to switch the playing out from the second sub-system to the first sub-system. The playing out at the second sub-system may continue or may be terminated automatically or under control of the end-user.

A fifth embodiment of the system in the invention comprises a controller for control of the first sub-system, the second sub-system and the data buffer, and configured for performing the series of steps mentioned above. The system comprises a first control interface at the first sub-system for communicating with the controller in operational use of the controller; and a second control interface at the second sub-system for communicating with the controller in operational use of the controller.

The controller in the fifth embodiment enables control of the first sub-system and the second sub-system so as to perform the series of steps. The controller may be accommodated at the first sub-system, or at the second sub-system, or at both. Alternatively, the controller is a module external to the first sub-system and external to the second sub-system so that neither one of the first sub-system and the second sub-system needs to be adapted or reconfigured for having the system perform the series of steps. For example, the controller is implemented on a general-purpose computer provided with suitable interfaces, application software and drivers to interact with the first sub-system and with the second sub-system.

The invention also relates to a first sub-system configured for playing out electronic information content that is being streamed as first data in a first streaming protocol and comprising a controller configured for use in above fifth embodiment of the system in the invention.

The invention also relates to a second sub-system configured for playing out electronic information content that is being streamed as second data in a second streaming protocol and comprising a controller configured for use in above fifth embodiment of the system in the invention.

The invention further relates to a controller configured for use in above fifth embodiment of the system in the invention.

The invention further relates to first control software for being installed on a data processing system and for configuring the data processing system for control of the system in the invention specified above. The first control software may be supplied as an electronic file downloadable via a data network, or stored on a computer-readable medium. The first control software comprises first instructions configured for performing the series of steps in response to the system receiving the command. The first instructions comprise: second instructions for determining a current identity of a current information content unit being currently played out at the first sub-system; third instructions for identifying a specific information content unit that is formed by specific ones of the second data buffered in the data buffer and with a specific identity corresponding to the current identity and fourth instructions for initiating the playing out of the electronic information content at the second sub-system from the data buffer from the specific information content unit onwards.

The invention also relates to second control software for being installed on a data processing system and for configuring the data processing system for control of the system of the second embodiment specified above. The second control software may be supplied as an electronic file that can be downloaded via a data network, or as stored on a computer-readable medium. The second control software comprises fifth instructions configured for performing the further series of steps in response to the system receiving the further command. The fifth instructions comprise: sixth instructions for determining a further specific identity of a further specific information content unit that is being played out at the second sub-system when the system receives the command; seventh instructions for determining a further current identity of a further current information content unit in the first data being received at the system; eighth instructions for comparing the further current identity to the further specific identity; and ninth instructions for initiating the playing out at the first sub-system of the electronic information content that is being received at the system in the first data, if the current identity corresponds to the specific identity.

The invention also relates to a method of controlling a system of an end-user, wherein the system is configured for playing out to the end-user electronic information content as a sequence of information content units. The electronic information content is being streamed as first data supplied in a relevant one of a first multicast or in a first broadcast using a first streaming protocol. The electronic information content is being streamed as second data supplied in a further relevant one of a second multicast or in a second broadcast using a second streaming protocol. The relevant one of the first multicast and the first broadcast and the further relevant one of the second multicast and the second broadcast run in parallel. The first streaming protocol is different from the second streaming protocol. The streaming of particular ones of the second data being representative of any particular one of the information content units in the relevant one of the second multicast and the second broadcast precedes the streaming of further particular ones of the first data being representative of the same, particular information content unit in the relevant one of the first multicast and the first broadcast. The system comprises a first sub-system configured for playing out the electronic information content that is being received as the first data; a second sub-system configured for playing out the electronic information content that is being received as the second data; and a data buffer. The method comprises performing a series of steps in response to receiving a command to switch a current playing out of the electronic information content from the first sub-system to the second sub-system. The series of steps comprises: determining a current identity of a current information content unit being currently played out at the first sub-system; identifying a specific information content unit that is formed by specific ones of the second data buffered in the data buffer and with a specific identity corresponding to the current identity; and initiating the playing out of the electronic information content at the second sub-system from the data buffer and from the specific information content unit onwards.

### BRIEF DESCRIPTION OF THE DRAWING

The invention is explained in further detail, by way of example and with reference to the accompanying drawing, wherein:
Figs.1 and 2 are diagrams illustrating the staggered temporal character of the delivery of different versions of the same electronic information content being streamed in parallel;
Fig.3 is a diagram of a system in the invention; and
Fig.4 is a process diagram illustrating an aspect of a method of the invention.

Throughout the Figures, similar or corresponding features are indicated by same reference numerals.

### DETAILED EMBODIMENTS

Briefly, the invention relates to the switching of the playing out of electronic information content between different versions that are being streamed in parallel and differ from one another in their streaming formats. As a result of the streaming formats being different, the playing out of the electronic information content in a first version at a first play-out sub-system lags behind the playing out of a second version at a second play-out sub-system. If the end-user issues a command to switch the playing out of the same information content from the first play-out sub-system to the second play-out sub-system, the data of the second version is buffered and the playing out of the second version starts from the buffer when the playing out of the first version has caught up with the state the second version assumed at the start of the buffering.

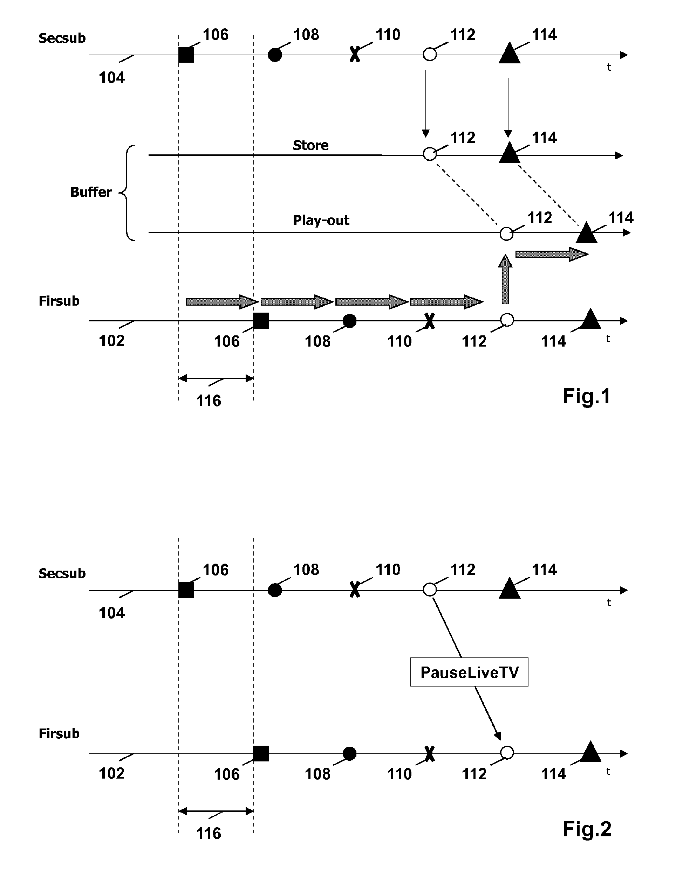

Fig.1 is a diagram illustrating the staggered temporal character of the delivery of different versions of the same piece of electronic information content, e.g., a live broadcast or a live multicast, that are being streamed in parallel using different streaming protocols. More specifically, the diagram of Fig.1 indicates a temporal offset between the delivery of the electronic information content, being streamed as first data via a first data network to a first destination and using a first streaming protocol, and the delivery of the same electronic information content being streamed as second data via a second data network to a second destination and using a second streaming protocol that is different from the first streaming protocol. The temporal offset is mainly due to the encoding and/or the encapsulation of the electronic information content into different streaming formats and may amount to, e.g., tens of seconds.

The first data network and the second data network may be different data networks, e.g., or may be one and the same data network, e.g., the Internet.

Examples of different streaming protocols are: HTTP Live Streaming (HLS), IP Multicast, Microsoft Smooth Streaming, MPEG-DASH, Adobe HTTP Dynamic Streaming.

HLS is a known, HTTP-based streaming technology from Apple, Inc. The overall data stream in HLS is broken down into a sequence of small HTTP-based file downloads, each download providing one short piece (e.g., a limited number of video frames or audio frames) of the electronic information content in a transport stream. As the stream is played out, the receiving client may select from a number of different alternative streams containing the same electronic information content encoded at a variety of data rates, allowing the streaming session to adapt to the available data rate. Since HLS uses only standard HTTP transactions, HLS is capable of traversing any firewall or proxy server that lets through standard HTTP traffic, unlike protocols based on ser datagram Protocol (UDP) such as Real-time Transport Protocol (RTP). Further, the use of standard HTTP transactions allows a content-delivery network to easily be implemented for any given stream.

IP Multicast is a method of sending Internet Protocol (IP) datagrams to multiple receivers in a single transmission. IP Multicast is typically employed for streaming media applications on managed data networks.

Microsoft Smooth Streaming is an extension of ISS Media Services. The acronym "IIS" stands for "Internet Information Services (IIS)" which is a web server application and set of feature extension modules created by Microsoft for use with Microsoft Windows. The Media Services extension integrates a media delivery platform with IIS to manage and administer delivery of rich media and other Web content.

MPEG-DASH is an MPEG standard for Dynamic Adaptive Streaming of HTTP (DASH) for Internet TV. MPEG-DASH is a video streaming solution where small pieces of video files are requested by the client and spliced together by the client. The client controls the delivery of the video files.

Adobe HTTP Dynamic Streaming is configured for on-demand and live video streaming online. This delivery method enables on-demand and live adaptive bitrate video streaming of standards-based MP4 media over regular HTTP connections.

The diagram of Fig.1 shows a first timeline 102 indicating the relative arrival times, at the first destination (not shown) on a data network, of various portions of the electronic information content that is being streamed using the first streaming protocol. The term "portion" refers herein to, e.g., a particular scene in a movie being streamed, or a particular video frame or audio frame in a sequence of frames being streamed in a live broadcast or in a multicast. Time runs in the direction of the arrow of the first timeline 102. Accordingly, the arrival of a first portion 106 precedes the arrival of a second portion 108; the arrival of a first portion 106 precedes the arrival of a second portion 108; the arrival of the second portion 108 precedes the arrival of a third portion 110; the arrival of the first portion 110 precedes the arrival of a fourth portion 112; the arrival of the fourth portion 112 precedes the arrival of a fifth portion 114, and so on.

The diagram of Fig.1 also shows a second timeline 104 indicating the relative arrival times, at the second destination (not shown) on a data network, of various portions of the same electronic information content that is being streamed using the second streaming protocol. Time runs in the direction of the arrow of the second timeline 104. The first portion 106, the second portion 108, the third portion 110, the fourth portion 112 and the fifth portion 114 arrive at the second sub-system in the same order as discussed above with reference to the first timeline 104.

The diagram of Fig.1 illustrates that the receipt, at the second destination, of any particular portion of the electronic information content being streamed using the second streaming protocol precedes receipt at the first destination of the same particular portion of the electronic information content being streamed using the first streaming protocol. For example, the first portion 106 arrives at the second destination well ahead of the first portion 106 arriving at the first destination, by a time difference indicated in the diagram of Fig.1 as an interval 116.

Now consider a scenario wherein the first destination is a first sub-system and the second destination is a second sub-system in a network-enabled system of the same end-user. For example, the first sub-system comprises a tablet PC of the end-user and the second sub-system comprises a set-top box (STB) connected to a TV set of the end-user, both the tablet PC and the TV-STB combination being parts of the network-enabled home system of the end-user. The end-user is watching electronic information content being streamed to his/her tablet PC and decides to switch the playing out of the information content to the STB.

The tablet PC is receiving the electronic information content being streamed in, e.g., the HTTP Live Streaming (HLS) protocol. After the STB has been switched on and has been tuned to the proper channel that is broadcasting or multicasting the same electronic information content, the STB starts receiving the electronic information content that is being streamed in parallel to the electronic information content being streamed to the tablet PC. The STB, however, uses, for example, IP Multicast as the streaming protocol.

The electronic information content is being streamed in HLS as well as in IP Multicast. The HLS data stream and the IP Multicast data stream occur in parallel. However, owing to the different streaming formats, the receipt of the electronic information content streamed in HLS and the receipt of the same electronic information content in IP Multicast are not synchronized. As a consequence, the end-user will either miss the playing out of a part of the electronic content or have to watch a part being played out twice, when switching the streaming session from one of the tablet PC and the STB to the other one of the tablet PC and the STB.

A more frequent scenario will probably be that the end-user is first playing out the electronic information content being streamed to the tablet PC and then switches to the playing out the same electronic information content at the STB for, e.g., a higher quality of the audio and/or the video being streamed. In practice, the electronic information content being streamed to the tablet PC using HLS lags behind the electronic information content being streamed to the STB using IP Multicast. That is, if both the tablet PC and the STB were turned on and were receiving the electronic information content streamed in HLS and IP Multicast, respectively, the end-user would perceive a particular segment of the electronic information content being played out at the tablet PC well after that same particular segment had been played out at the STB.

A less frequent scenario will probably be that the end-user is first playing out the electronic information content being streamed to the STB and then switches to the playing out at the tablet PC, e.g., as a result of relinquishing the use of the STB to another person so that the end-user has to resort to the tablet PC in order to continue being able to consume (watch, or listen to) the electronic information content being streamed. As mentioned above, the electronic information content being streamed to the tablet PC using HLS lags behind the electronic information content being streamed to the STB using IP Multicast. As a result, if the end-user instantly switches the session of playing out the electronic information content from the STB to the tablet PC, the end-user will perceive a particular segment of the electronic content that has been played out at the STB last before switching to the tablet PC and the same particular segment again when starting the play-out at the tablet PC.

The inventor therefore proposes the following approach so as to be able to reduce the impact of the switching on the consumption of the electronic information content by the end-user between play-out sub-systems that use different streaming protocols. In case a command is issued, e.g., by the end-user, to switch the playing out from the tablet PC to the STB, the electronic information content being streamed in IP Multicast to the STB is initially stored into a data buffer, e.g., a FIFO (fist-in-first-out) buffer. As soon as the electronic information content that is being streamed to the tablet PC in HSL and played out at the tablet PC, has progressed to a phase, wherein the portion currently played out at the tablet PC corresponds to the first portion of the electronic information content that was streamed in IP Multicast to the STB and stored in the data buffer, the playing out of the electronic information content switches from the tablet PC to the STB, and the electronic information content starts to be played out at the STB from the data buffer.

The option of switching the playing out of the electronic information content from the first sub-system to the second sub-system may be offered as a value-added service for which customers have to pay, e.g., a subscription fee. For example, the service provider streaming the first data and the second data may also implement the controlling mechanism that gets invoked upon the end-user issuing a command to his/her system to switch the playing out from the first sub-system to the second sub-system, using a data buffer at, or under control of, the service provider.

The switching therefore occurs when above condition is complied with: "the portion currently played out at the tablet PC corresponds to the first portion of the electronic information content that was streamed in IP Multicast to the STB and stored in the data buffer". The switching can be implemented in a variety of manners. For example, the switching itself may be controlled so as to gradually reduce the volume of the audio and/or the brightness of the video at the tablet PC and to gradually increase the audio volume and and/the brightness of the video from the STB during the play-out of the same portion at both the tablet PC and the TV-STB combination. As another example, the switching is controlled so as to have the tablet PC change from playing out the electronic information content in full-screen video mode to playing out the video part only of the electronic information content in a small window on the screen of the display monitor of the tablet PC, after the TV-STB combination has started the playing out the electronic information content from the data buffer. As yet another example, as soon as the begin of the portion of the electronic information content currently received at the tablet PC equals the begin of the portion of the electronic content stored in the data buffer, the tablet PC is turned off or the streaming software application is stopped at the tablet PC, and the playing out at the TV-STB combination starts from the data buffer. As still another example, the PC-tablet switches to a Remote Control application, which in turn further controls the TV-STB combination via Wi-Fi.

In order to notify the end-user of the fact that the switching process is in progress, a notification may be given to the end-user via the tablet PC and/or via the TV-STB combination, for example, in the form of a message being displayed on the display monitor of one or both of the tablet PC and the TV-STB combination. The message may be a text message such as "switching in progress" e.g., in a semitransparent overlay at the bottom or top of the screen of the display monitor, or a simple, unobtrusive icon displayed in a corner of the screen of the display monitor, etc.

As specified above, the switching occurs when an identity of the portion currently played out at the tablet PC corresponds to an identity of the first portion of the electronic information content that was streamed in IP Multicast to the STB and stored in the data buffer. The feature "corresponds to" in above condition can be implemented in a variety of manners.

For example, consider the playing out of the streamed electronic information content as a process that evolves as time goes by. The playing out of the streamed electronic information content is then considered a linear process in the sense of the playing-out of the streamed electronic information content is a process that traverses a sequence of information units, each being rendered according to its relative position in the sequence: a particular video frame (or audio frame) following another video frame (or audio frame) and preceding yet another video frame (or audio frame). Each particular one of the information units is given a particular mark, e.g., by the provider of the electronic information content, for identifying the particular information unit in the sequence of information units forming the electronic information content being streamed. Alternatively, the electronic information content is considered a sequence of non-overlapping sets of successive information units, and each particular one of the sets is given a particular mark for identifying the particular set in the sequence of non-overlapping sets forming the electronic information content being streamed. The particular mark is accommodated, e.g., in the metadata accompanying the particular information unit or accompanying the particular set when streamed to its destination. The particular mark comprises, e.g., a particular sequence number or a particular time stamp, etc. As soon as the current mark of the information unit currently received at the tablet PC equals, or is approaching, the mark of the first information unit in the data buffer, the playing-out of the electronic information content at the tablet PC is switched to the playing out at the TV-STB combination via the data buffer. Likewise, as soon as the current mark of the set of successive information units currently received at the tablet PC, equals or is approaching the mark of the first set of information units stored in the data buffer, the playing-out of the electronic information content at the tablet PC is switched to the playing out at the TV-STB combination via the data buffer. The feature "the current mark .. is approaching the mark of ..." is intended to allow for a seamless transition by taking the time into account that is needed to process the current mark and the mark associated with the first information unit or of the first set of information units stored in the data buffer, etc.

As another example, upon the switching command being issued, a current identifier is generated, e.g., at the tablet PC, operative to identify the currently received information unit or the currently received set of successive information units. The current identifier comprises, e.g., a hash value of the data of the information unit or of the data of the set of successive information units currently received at the tablet PC. The current identifier is determined according to a pre-determined algorithm. The current identifier is submitted from the tablet PC to the controller of the data buffer. The controller of the data buffer uses the same pre-determined algorithm for determining a buffer identifier of the first information unit or of the first set of information units stored in the data buffer. As soon as the current identifier equals the buffer identifier, the playing out is switched from the tablet PC to the TV-STB combination, and the TV-STB combination starts playing out the electronic information content from the data buffer.

Accordingly, the particular mark enables to determine when to switch the playing out from the tablet PC to the playing out at the TV-STB combination via the data buffer.

Fig.2 is a diagram illustrating the switching of the playing out from the TV-STB combination to the tablet PC.

When switching the playing out of the electronic information content from the TV-STB combination to the tablet PC, a seamless transition is not readily effected, as the receipt of any portion of the streamed electronic information content at the TV-STB combination always precedes the receipt of the same portion at the tablet PC. In this event, the "Pause Live TV" feature of the STB-TV combination can be used. The "Pause Live TV" feature is also referred to as "Chase Play". The "Pause Live TV" feature is a time-shifting facility of a typical personal video recorder (digital video recorder). Activating this facility causes the streamed electronic content, received as from the moment of activating this facility, to be stored in the data buffer of the STB-TV combination. The "Pause Live TV" feature enables the end-user to interrupt the playing out of the streamed electronic information content, and to later on continue the playing out, from the data buffer, at the information unit or at the set of successive information units, during whose receipt at the STB the "Pause Live TV" feature had been activated. As above, each information unit or set of successive information units can be identified. The identifier ("pause identifier") is determined of the information unit, or set of successive information units, during whose receipt at the STB the "Pause Live TV" feature got invoked. Once the tablet PC has been activated and tuned to receiving the same streamed information content in the streaming format of the tablet PC, the current identifier is determined of the information unit, or set of successive information units, currently received at the tablet PC. As soon as the current identifier equals, or is approaching the pause identifier, the playing out at the tablet PC is started.

Alternatively, only the identifier ("STB-identifier") is determined for the information unit, or set of successive information units, during whose receipt at the STB the switching procedure got invoked. That is, there is no buffering of the electronic information content streamed to the STB-TV combination. Playing out at the TV-STB combination is halted, optionally succeeded by a notification to the end-user that playing out is being switched to the tablet PC. Once the tablet PC has been activated and tuned to receiving the same streamed information content in the streaming format of the tablet PC, the current identifier is determined of the information unit, or set of successive information units, currently received at the tablet PC. As soon as the current identifier equals, or is approaching the STB-identifier, the playing out at the tablet PC is started.

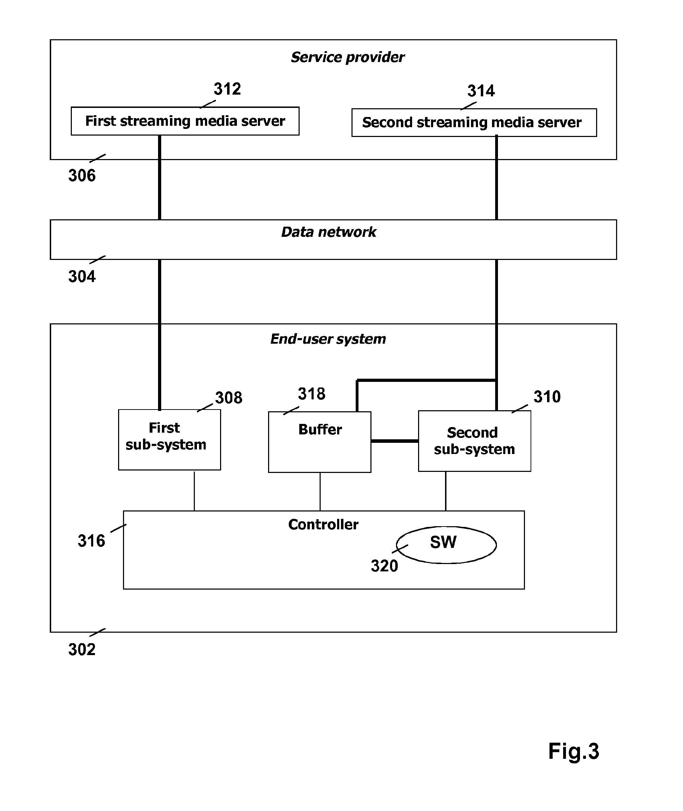

Fig.3 is a block diagram of a system 302 of an end-user that communicates via a data network 304, e.g., the Internet, with streaming equipment of a service provider 306.

The system 302 comprises a first sub-system 308 and a second sub-system 310. The first sub-system 308 is configured for receiving and playing out electronic information content that is being streamed using a first streaming protocol. The second sub-system 308 is configured for receiving and playing out electronic information content that is being streamed using a second streaming protocol different from the first streaming protocol.

The streaming equipment of the service provider 306 comprises a first streaming media server 312 for streaming electronic information content using the first streaming protocol and a second streaming media server 314 for streaming the electronic information content using the second streaming protocol. The first streaming media server 312 and the second streaming media server 314 are configured for streaming the same electronic information content in parallel, the first streaming media server 312 using the first stream ing protocol and the second stream ing media server 314 using the second stream ing protocol. As explained above with reference to the diagram of Fig.1, receipt at the first sub-system 308 system of the data making up any particular portion of the electronic information content being streamed using the first streaming protocol lags behind the receipt at the second sub-system 310 of the data making up the particular portion of the electronic information content being streamed using the second streaming protocol.

The system 302 of the end-user further comprises a controller 316 and a data buffer 318. The controller 316 is configured for controlling the switching of the playing out of the streamed electronic information content from the first sub-system 308 to the second sub-system 310 or vice versa. The data buffer 318 is configured for buffering the data making up a certain portion of the electronic information content being streamed to the second sub-system using the second streaming protocol.

The controller 316 may form a functional part of the first sub-system 308 in operational use of the first sub-system 308, and may be accommodated at the first sub-system 308, e.g., in the same housing as the rest of the first sub-system 308.

Alternatively, the controller 316 may form a functional part of the second sub-system 310 in operational use of the second sub-system 310, and may be accommodated at the second sub-system 310, e.g., in the same housing.

Alternatively, the controller 316 is a part of a separate entity, forming a functional component of neither the first sub-system 308 nor the second sub-system 310. The controller 316 is then configured for communicating with the first sub-system 308 and for communicating with the second sub-system 310. The first sub-system 308 and the second sub-system 310 may be accessible via different communication protocols (e.g., UPnP versus proprietary) and/or via different communication technologies (e.g., wired versus wireless). The controller 316 may then itself be configured for communicating with the first sub-system 308 and the second sub-system 310 using different communication protocols and/or different communication technologies. For example, the controller 316 comprises different interfaces (not shown) for communicating with different ones of the first sub-system 308 and the second sub-system 310. Another option is that the controller 316 is configured for using a particular communication protocol and a particular communication technology for communicating with the first sub-system 308 via a first converter (not shown), and for communicating with the second sub-system 310 via a second converter (not shown). The first converter interfaces with the controller 316 through the particular communication protocol and the particular communication technology of the controller 316, and the first converter interfaces with the first sub-system 308 through another communication protocol and/or another communication technology that is being used by the first sub-system 308. Likewise, the second converter interfaces with the controller 316 through the particular communication protocol and the particular communication technology of the controller 316, and the second converter interfaces with the second sub-system 310 through a further communication protocol and/or a further communication technology that is being used by the second sub-system 310. The first converter and the second converter may, again, be separate entities or may be implemented by another sub-system (not shown) of the system 302 of the end-user.

Similarly, the data buffer 318 may form a functional part of the first sub-system 308 in operational use of the first sub-system 308, and may be accommodated at the first sub-system 308, e.g., in the same housing as the rest of the first sub-system 308. Alternatively, the data buffer 318 may form a functional part of the second sub-system 310 in operational use of the second sub-system 310, and may be accommodated at the second sub-system 310, e.g., in the same housing. Alternatively, the data buffer 318 is a part of a separate entity (not shown), which forms a functional component of neither the first sub-system 308 nor the second sub-system 310. The separate entity may be yet another sub-system (not shown) of the system 302 of the end-user, or may be implemented externally to the system 302 of the end-user, e.g., by a server (not shown) on the data network 304, or may be accommodated at the equipment of the service provider 306.

When a specific command is issued to the system 302, e.g., by the end-user, for switching the current playing out of the streamed electronic information content from the first sub-system 308 to the second sub-system 310, the controller 316 is configured for executing following steps in response to the specific command. It is assumed that the second sub-system 310 is in a stand-by mode or has been switched off before the command is issued.

The controller 316 receives a specific instruction representative of the specific command received by the system 302. For example, consider a remote control device (not shown) of the end-user that is being used to control the first sub-system 308 in operational use of the first sub-system 308, and to control the second sub-system 310 in operational use of the second sub-system 310. The remote control device has been configured to send the specific command to the first sub-system 308 upon a specific user-interaction of the end-user with the remote control device. The controller 316 receives the specific command from the remote control device or, alternatively, the first sub-system 308 is configured to send the specific instruction to the controller 316 in response to receiving the specific command at a command input of the first sub-system 308. The specific instruction comprises the specific command, or is otherwise representative of the specific command, e.g., through a transcoding the specific command at the first sub-system 308 into the specific instruction or through a look-up table that associates the specific command with the specific instruction, etc.

After receipt of the specific instruction, the controller 316 controls the second sub-system 310 to start receiving the electronic information content being streamed using the second streaming protocol. For example, the controller 316 switches the second sub-system 310 on, or causes the second sub-system 310 to switch from the stand-by mode into the active mode, and causes the second sub-system 310 to tune to the channel of the second streaming media server 314.

In order to illustrate how the second sub-system 310 is controlled so as to tune to the proper channel of the second broadcast or second multicast, consider the scenario wherein each of the first sub-system 308 and the second sub-system 310 is provisioned with a Channel List indicating, e.g., the identifiers of the channels, channel names, positions in the channel line-up, and the network addresses of the relevant channels. The Channel List for the first sub-system 308 and the Channel List for the second sub-systems 310 typically differ from one another, because the first sub-system 308 operates on respective streams and respective network addresses that are different from those operated upon by the second sub-system 310. In order to let the second sub-system 310 tune to the proper channel of the second multicast or second broadcast, one may use equal identifiers for the channels across the first sub-system 308 and the second sub-system 310. Accordingly, when the second sub-system 310 receives a command to tune to a specific channel with a specific channel identifier, the second sub-system 310 is controlled to consult the Channel List of the second sub-system 310 so as to find the second data stream for this specific channel. As an alternative, a look-up table is provided to enable to match each respective channel of the Channel List of the first sub-system with a respective one of the channels in the Channel List of the second sub-system 310. Upon the end-user system 302 receiving the command to switch the playing out of the information content from the first sub-system 308 to the second sub-system 310, the first sub-system 308 may communicate the identifier of the channel currently tuned into to the second sub-system 310 or to another device, e.g., the controller 316, using the look-up table so as to identify the relevant channel on the Channel List of the second sub-system 310 via the look-up table. Alternatively, upon the end-user system 302 receiving the switching command, the second sub-system 310 may request the channel identifier from the first sub-system 308 and use the look-up table so as to identify the relevant channel on the Channel List of the second sub-system 310.

In addition, the controller 316 controls the data buffer 318 to start buffering the second data being received at the second sub-system 310. The controller 316 further determines a specific identity of a specific information content unit formed by specific ones of the second data buffered in the data buffer 318 at a start of the buffering, as discussed earlier. The controller 316 further determines a current identity of a current information content unit being currently played out at the first sub-system 308. The controller 316 compares the current identity to the specific identity; and initiates the playing out of the electronic information content at the second sub-system 310 from the data buffer 318 if the current identity corresponds to the specific identity.

The controller 316 may be dedicated hardware module or a general-purpose data processing module that has been configured for above operations by installing dedicated software 320.

Similarly, the controller 316 performs a specific procedure in response to the system 302 of the end-user receiving a further command to switch a current playing out of the electronic information content from the second sub-system 310 to the first sub-system 308. The controller 316 determines a further specific identity of a further specific information content unit that is being played out at the second sub-system 310 when the current playing out is being stopped at the second sub-system 310. The controller 316 determines a further current identity of a further current information content unit in the first data being received at the system 302 and compares the further current identity to the further specific identity. When the current identity corresponds to the specific identity, the controller 316 initiates the playing out at the first sub-system 308 of the electronic information content that is being received at the system 302 in the first data.

Again, the controller 316 may be dedicated hardware module or a general-purpose data processing module that has been configured for above operations by installing dedicated software 320.

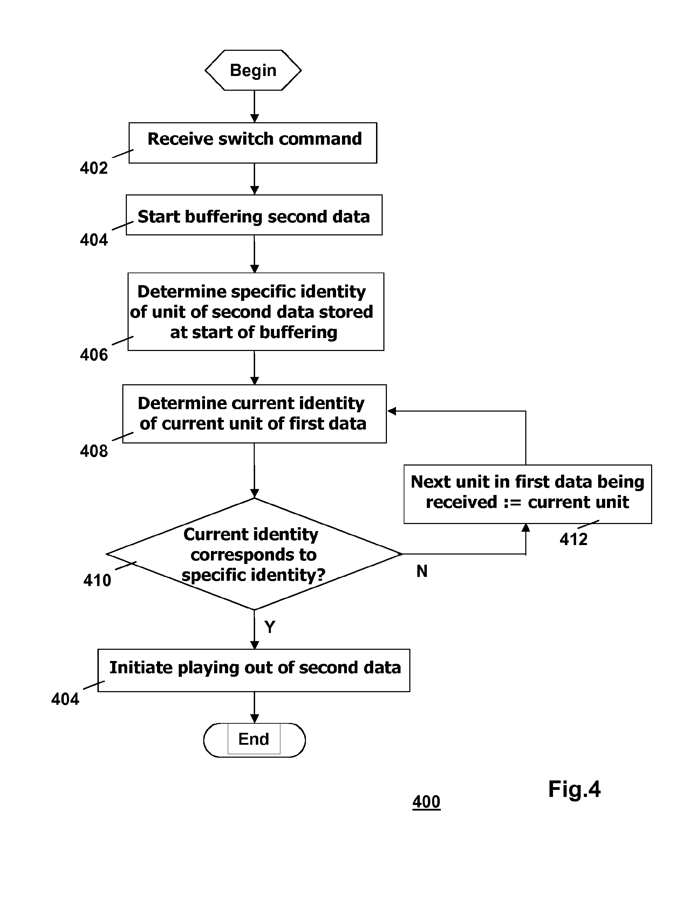

Fig.4 is a flow diagram of a process 400 illustrating an aspect of a method according to the invention that relates to the switching of the playing out of the streamed electronic information content from the first-subsystem 308 to the second sub-system 310.

In a first step 402, a command is received to switch a current playing out of the electronic information content from the first sub-system 308 to the second sub-system 310.

In a second step 404, the buffering is started of the electronic information content being streamed to the system 302 as the second data.

In a third step 406, a specific identity is determined of a specific information content unit formed by specific ones of the second data buffered at a start of the buffering.

In a fourth step 408, a current identity is determined of a current information content unit being currently played out at the first sub-system 308.

In a fifth step 410, the current identity is compared to the specific identity.

If the current identity does not correspond to the specific identity, the process 400 proceeds to the sixth step 412. In the sixth step 412, the next information content unit in the first data is being considered that becomes the current information content unit. The process 400 then returns to the fourth step 408.

If it is determined in the fifth step 410, that the current identity does correspond to the specific identity, the process 400 continues with a seventh step 414. In the seventh step 414, the playing out is initiated of the electronic information content at the second sub-system 310 by playing out the buffered second data.

## Claims

1. A system (302) of an end-user that is configured for playing out to the end-user electronic information content as a sequence of information content units, that comprises:
a first sub-system (308) for playing out electronic information content;
a second sub-system (310) for playing out electronic information content; and
a buffer interface to a data buffer (318) for buffering electronic information content;
wherein:
the electronic information content is being streamed to the first sub-system (308) as first data supplied in either a first multicast or in a first broadcast, using a first streaming protocol;
the electronic information content is being streamed to the second sub-system (310) as second data supplied in either a second multicast or in a second broadcast, using a second streaming protocol;
the first data and the second data run in parallel;
the first streaming protocol is different from the second streaming protocol;
the streaming of information content units of the second data having particular identities precedes the streaming of further information content units of the first data having further particular identities which correspond to the particular identities of the second data;
the first sub-system (308) is configured for playing out the electronic information content that is being received as the first data;
the second sub-system (310) is configured for playing out the electronic information content that is being received as the second data; and
the data buffer (318) is configured for buffering the second data;
**characterised in that**:
the system is configured for performing a series of steps in response to the system receiving a command to switch a current playing out of the electronic information content from the first sub-system to the second sub-system, wherein the series of steps comprises:
determining a current identity of a current information content unit of the first data being currently played out at the first sub-system;
identifying a specific information content unit of the second data buffered in the data buffer that has a specific identity corresponding to the current identity; and
initiating the playing out of the electronic information content at the second sub-system from the data buffer from the specific information content unit of the second data onwards.

2. The system of claim 1, wherein the series of steps comprises controlling the data buffer to start buffering of the second data in the data buffer.

3. The system of claim 1, wherein the data buffer is operative to accumulate the second data as from a start of the second broadcast or of the second multicast.

4. The system of claim 1, wherein the data buffer is operative to accumulate the second data as from a start of receiving the first data at the first sub-system.

5. The system of claim 1, wherein the system is configured for performing a further series of steps in response to the system receiving a further command to switch a current playing out of the electronic information content from the second sub-system to the first sub-system, wherein the further series of steps comprises:
determining a further specific identity of a further specific information content unit of the second data that is being played out at the second sub-system when the system receives the further command;
determining a further current identity of a further current information content unit of the first data being received at the system;
comparing the further current identity to the further specific identity; and
initiating the playing out at the first sub-system of the electronic information content that is being received at the system in the first data, if the further current identity corresponds to the further specific identity.

6. The system of claim 1, comprising:
a controller for control of the first sub-system, the second sub-system and the buffer interface and configured for performing the series of steps;
a first control interface at the first sub-system for communicating with the controller in operational use of the controller; and
a second control interface at the second sub-system for communicating with the controller in operational use of the controller.

7. The system of claim 5, comprising:
a controller for control of the first sub-system, the second sub-system and the buffer interface and configured for performing the series of steps;
a first control interface at the first sub-system for communicating with the controller in operational use of the controller; and
a second control interface at the second sub-system for communicating with the controller in operational use of the controller.

8. A first sub-system (308) configured for playing out electronic information content that is being streamed as first data in a first streaming protocol **characterised by** comprising a controller configured for use in the system of claim 6.

9. A first sub-system (308) configured for playing out electronic information content that is being streamed as first data in a first streaming protocol **characterised by** comprising a controller configured for use in the system of claim 7.

10. A second sub-system (310) configured for playing out electronic information content that is being streamed as second data in a second streaming protocol **characterised by** comprising a controller configured for use in the system of claim 6.

11. A second sub-system (310) configured for playing out electronic information content that is being streamed as second data in a second streaming protocol **characterised by** comprising a controller configured for use in the system of claim 7.

12. A controller (316) configured for use in the system of claim 6.

13. A controller (316) configured for use in the system of claim 7.

14. First control software (320) for being installed and executed on a data processing system and for configuring the data processing system for control of the system of claim 1, wherein:
the first control software comprises first instructions configured for performing the series of steps in response to the system receiving the command; and
the first instructions comprise:
second instructions for determining a current identity of a current information content unit of the first data being currently played out at the first sub-system;
third instructions for identifying a specific information content unit of the second data buffered in the data buffer and with a specific identity corresponding to the current identity; and
fourth instructions for initiating the playing out of the electronic information content at the second sub-system from the data buffer from the specific information content unit.

15. Second control software (320) for being installed and executed on a data processing system and for configuring the data processing system for control of the system of claim 5, wherein:
the second control software comprises fifth instructions configured for performing the further series of steps in response to the system receiving the further command; and
the fifth instructions comprise:
sixth instructions for determining a further specific identity of a further specific information content unit of the second data that is being played out at the second sub-system when the system receives the further command;
seventh instructions for determining a further current identity of a further current information content unit of the first data being received at the system;
eighth instructions for comparing the further current identity to the further specific identity; and
ninth instructions for initiating the playing out at the first sub-system of the electronic information content that is being received at the system in the first data, if the further current identity corresponds to the further specific identity.

16. A method of controlling a system (302) of an end-user, wherein:
the system is configured for playing out to the end-user electronic information content as a sequence of information content units;
the system comprises:
a first sub-system (308) for playing out electronic information content;
a second sub-system (310) for playing out electronic information content; and
a buffer interface to a data buffer (318) for buffering electronic information content;
the electronic information content is being streamed to the first sub-system (308) as first data supplied in either a first multicast or in a first broadcast using a first streaming protocol;
the electronic information content is being streamed to the second sub-system (310) as second data supplied either a second multicast or in a second broadcast using a second streaming protocol;
the first data and the second data run in parallel;
the first streaming protocol is different from the second streaming protocol;
the streaming of information content units of the second data having particular identities precedes the streaming of further information content units of the first data having further particular identities which correspond to the particular identities of the second data;
the first sub-system (308) is configured for playing out the electronic information content that is being received as the first data;
the second sub-system (310) is configured for playing out the electronic information content that is being received as the second data; and
the data buffer (318) is configured for buffering the second data;
**characterised in that** the method comprises:
performing a series of steps in response to receiving a command to switch a current playing out of the electronic information content from the first sub-system to the second sub-system, wherein the series of steps comprises:
determining a current identity of a current information content unit of the first data being currently played out at the first sub-system;
identifying a specific information content unit of the second data buffered in the data buffer with a specific identity corresponding to the current identity; and
initiating the playing out of the electronic information content at the second sub-system from the data buffer and from the specific information content unit of the second data onwards.
